# EUROPEAN PATENT APPLICATION

(11) **EP 4 503 591 A1**
(43) Date of publication of application: **05.02.2025**
(21) Application number: 22935124.2
(22) Date of filing: 29.03.2022
(51) Int. Cl.: H04N 5/272

(54) **INFORMATION PROCESSING DEVICE, METHOD FOR CONTROLLING INFORMATION PROCESSING DEVICE, AND PROGRAM**

(71) Applicant: Sony Interactive Entertainment Inc., Tokyo 108-0075 (JP)
(72) Inventor: TOKUNAGA, Nodoka, Tokyo 108-0075 (JP); MATSUNAGA, Kiyobumi, Tokyo 108-0075 (JP); FUJIHARA, Masahiro, Tokyo 108-0075 (JP); TAKASE, Masaki, Tokyo 108-0075 (JP)
(74) Representative: D Young & Co LLP
(86) International application number: PCT/JP2022/015398
(87) International publication number: WO 2023/187973

(57) **Abstract**

An information processing apparatus 10 generates a screen including an image that becomes a target of operation by a user, and acquires line-of-sight position information representing a position that is a position on the generated image and that is the position of the line of sight of the user who executes operation while viewing the screen including the image. Further, the information processing apparatus 10 generates output information including an additional image disposed in such a manner as to overlap with the generated image and the generated image in reference to the acquired line-of-sight position information of the user. This output information is provided for predetermined processing.

## Description

### [Technical Field]

The present invention relates to an information processing apparatus, a control method for an information processing apparatus, and a program.

### [Background Art]

In recent years, in a virtual reality (VR) technique and the like, there has been an example in which line-of-sight information of a user who watches video of VR is acquired and this line-of-sight information is used for generation of the video of VR.

### [Summary]

### [Technical Problem]

Yet, under the current circumstances, the line-of-sight information of the user acquired for generating video is only used exclusively for the generation of the video as the purpose and is not effectively utilized for other use purposes.

The present invention has been made in view of the above-described current conditions, and one of objects thereof is to provide an information processing apparatus, a control method for an information processing apparatus, and a program that can effectively utilize line-of-sight information regarding a user acquired when video of VR or the like is generated.

### [Solution to Problem]

An information processing apparatus according to one aspect of the present invention includes screen generation means that generates a screen including an image that becomes a target of operation by a user, acquisition means that acquires line-of-sight position information representing a position that is a position on the generated image and is a position of a line of sight of the user who executes operation while viewing the screen including the image, and output information generation means that generates output information including additional information representing the acquired line-of-sight position information of the user and the image included in the screen. The output information is provided for predetermined processing.

According to the present invention, line-of-sight information of the user can be effectively utilized.

### [Brief Description of Drawings]

[FIG. 1]

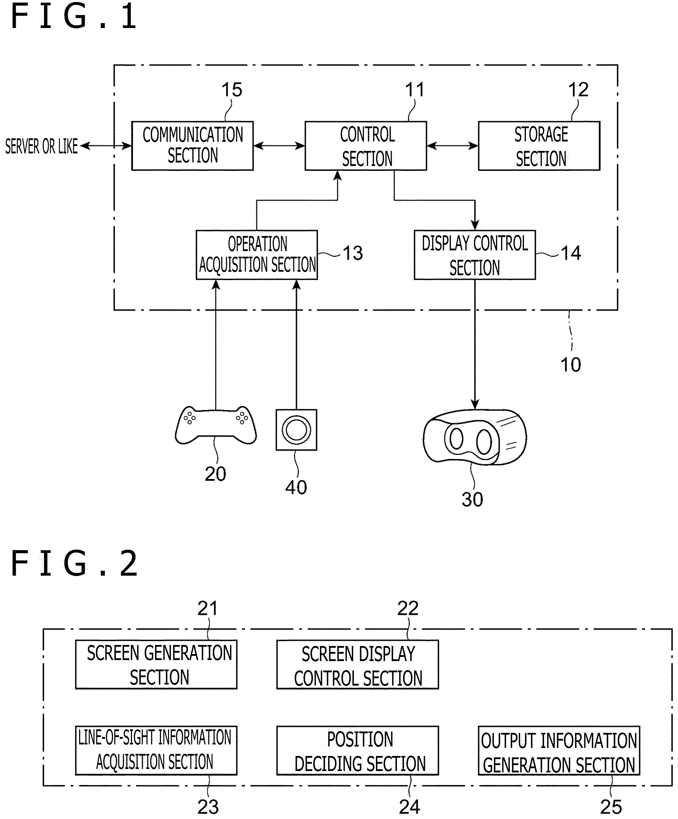

   FIG. 1 is a block diagram representing a configuration example of an information processing apparatus according to an embodiment of the present invention.
[FIG. 2]
   FIG. 2 is a functional block diagram representing an example of the information processing apparatus according to the embodiment of the present invention.
[FIG. 3]

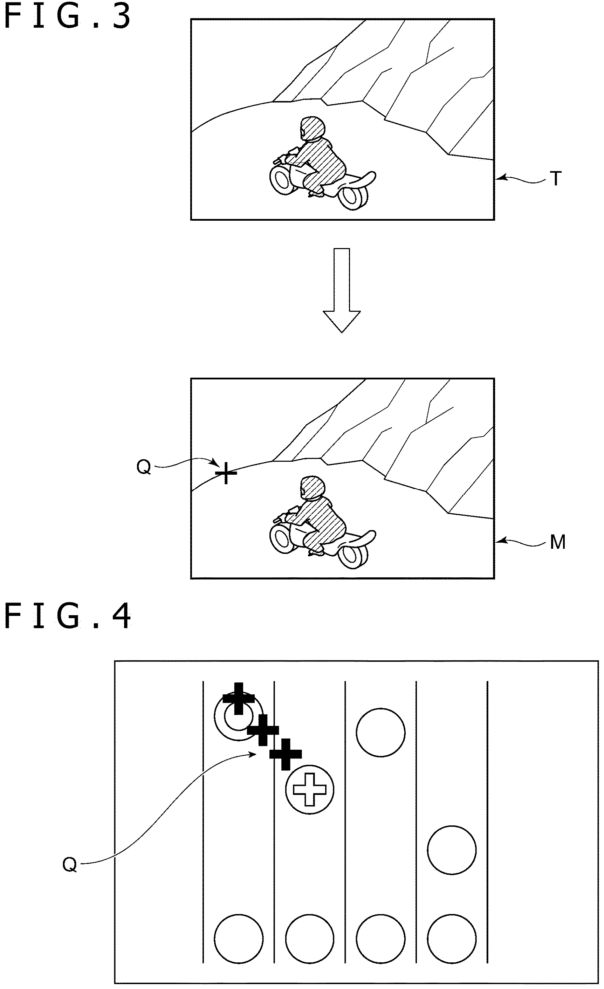

   FIG. 3 is an explanatory diagram representing an example of a synthesized image generated by the information processing apparatus according to the embodiment of the present invention.
[FIG. 4]
   FIG. 4 is an explanatory diagram representing another example of the synthesized image generated by the information processing apparatus according to the embodiment of the present invention.
[FIG. 5]

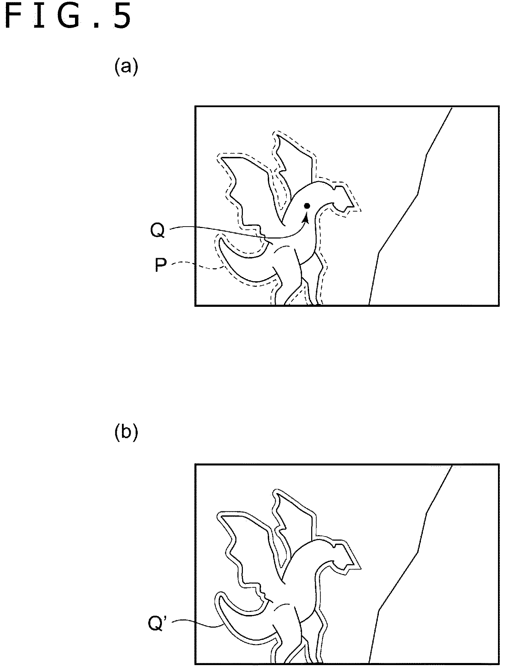

   FIG. 5 is an explanatory diagram representing yet another example of the synthesized image generated by the information processing apparatus according to the embodiment of the present invention.
[FIG. 6]

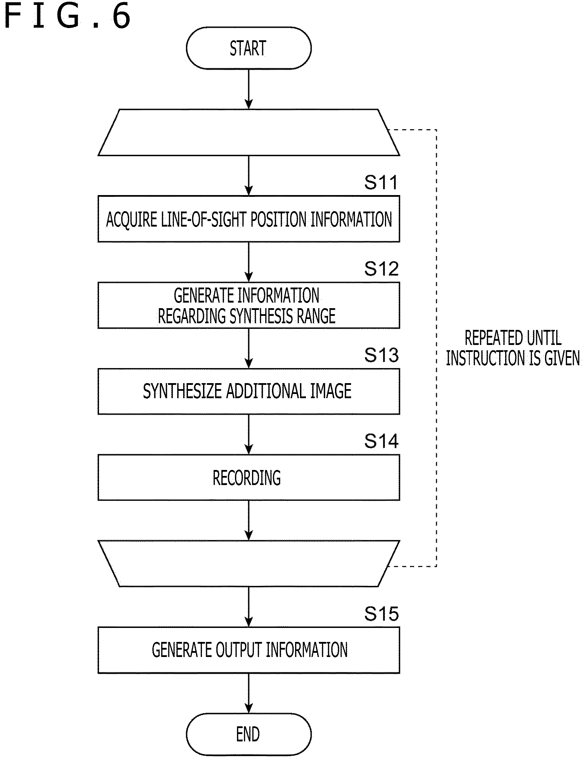

   FIG. 6 is a flowchart representing an operation example of the information processing apparatus according to the embodiment of the present invention.
[FIG. 7]

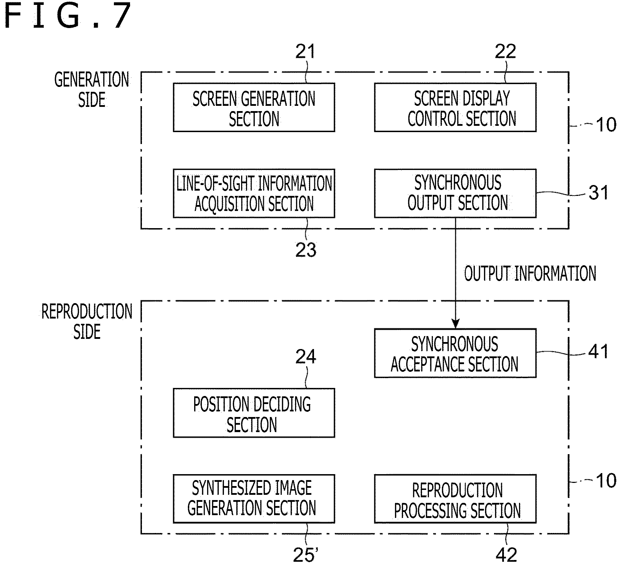

   FIG. 7 is a functional block diagram representing an example of a system including the information processing apparatus according to the embodiment of the present invention.

### [Description of Embodiment]

An embodiment of the present invention will be described with reference to the drawings. An information processing apparatus 10 according to the embodiment of the present invention is, for example, a personal computer, a home-use game console, or the like. As exemplified in FIG. 1, the information processing apparatus 10 includes a control section 11, a storage section 12, an operation acquisition section 13, a display control section 14, and a communication section 15, and is connected to a controller device 20, a display device 30, and a line-of-sight detection device 40.

The control section 11 is a program control device such as a central processing unit (CPU), and operates in accordance with a program stored in the storage section 12. In the present embodiment, this control section 11 generates a screen including an image that becomes a target of operation by a user and displays and outputs the screen. In addition, the control section 11 acquires, from the line-of-sight detection device 40, information representing the position that is a position on the generated image and is the position of the line of sight of the user who executes operation while viewing the screen including the image.

Further, this control section 11 generates output information including additional information representing the acquired information regarding the line-of-sight position of the user and the image included in the screen with which the user executes operation, according to an instruction by the user or settings. In one example exemplified here, the additional information is an additional image disposed to overlap with the generated image according to the acquired information regarding the line-of-sight position of the user. In this example, the control section 11 generates the output information including the additional image and the image included in the screen with which the user executes operation. Further, the control section 11 provides the generated output information for predetermined processing of delivery or the like. The contents of detailed processing by this control section 11 will be described later.

The storage section 12 includes a storage device such as a disk device or a memory device. A program to be executed by the control section 11 is stored in this storage section 12. This program may be a program that has been provided in such a manner as to be stored in a computer-readable non-transitory recording medium and that has been stored in this storage section 12. Moreover, this storage section 12 operates also as a work memory for the control section 11.

The operation acquisition section 13 receives the contents of operation performed by a user from the controller device 20, and outputs the contents to the control section 11. The display control section 14 is connected to the display device 30, and outputs an instructed image to the display device 30 in accordance with an instruction input from the control section 11.

The communication section 15 is a network interface or the like, and sends out data such as the output information to another information processing apparatus 10, a server apparatus (not illustrated), or the like connected thereto through a network in accordance with an instruction input from the control section 11. Further, this communication section 15 outputs, to the control section 11, data received from another information processing apparatus 10, the server apparatus, or the like through the network.

The controller device 20 is a game controller, a mouse, a keyboard, or the like, and outputs information representing operation executed by the user to the information processing apparatus 10. The display device 30 is a display, a head mounted display (HMD), or the like, and presents an instructed image to the user in accordance with an instruction input from the information processing apparatus 10.

The line-of-sight detection device 40 detects the line of sight of the user who executes operation relating to an image displayed by the display device 30 while visually recognizing this image, and outputs information for identifying a part of the image present on the line of sight of the user (line-of-sight position information) to the information processing apparatus 10. The format of this line-of-sight position information may be any kind as long as it is information that can indicate a position on the target image present on the line of sight of the user.

In one example of the present embodiment, this line-of-sight detection device 40 may be a device that is disposed inside an HMD and outputs the line-of-sight position information representing the line-of-sight position of a user on an image presented by the HMD. Alternatively, the line-of-sight detection device 40 may be a device that is attached to a display and includes a camera that images a user and outputs the line-of-sight position information representing the line-of-sight position of the user on an image presented by the display from the relative position between the position of a pupil of the user and the display. Widely known devices can be used as these line-of-sight detection devices 40, and hence detailed description thereof is omitted here.

Next, operation of the control section 11 of the information processing apparatus 10 will be described. In the present embodiment, by executing the program stored in the storage section 12, this control section 11 implements, as exemplified in FIG. 2, a configuration functionally including a screen generation section 21, a screen display control section 22, a line-of-sight information acquisition section 23, a position deciding section 24, and an output information generation section 25.

The screen generation section 21 generates a screen including an image that becomes a target of operation by a user, by using information representing the contents of the operation performed by the user that is input from the operation acquisition section 13. For example, when the control section 11 is a section that executes a program of a game application, the image that becomes a target of operation by the user here is an image of a game that successively changes, and the user operates a character or the like displayed in this image. Alternatively, when the control section 11 is a section that executes a program of an application to reproduce a moving image or the like, the image that becomes a target of operation by the user is this moving image, and the screen generation section 21 executes processing of reproduction, stop, and the like of the moving image according to operation of reproduction and stop of the moving image input from the user.

The screen display control section 22 sequentially outputs the target images successively generated by the screen generation section 21 to the display device 30 through the display control section 14, and causes the display device 30 to display the target images.

The line-of-sight information acquisition section 23 acquires, from the line-of-sight detection device 40, the line-of-sight position information representing the position that is a position on an image that is generated by the screen generation section 21 and displayed by the display device 30 (hereinafter, referred to as a target image) and that is the position of the line of sight of the user who executes operation while viewing a screen including the target image.

According to an instruction by the user or settings, when the user gives an instruction on generation of an image to which the line-of-sight position information is added, the position deciding section 24 decides the overlap position of an additional image disposed to overlap with the target image generated by the screen generation section 21, in reference to the acquired line-of-sight position information of the user. As one example, this position deciding section 24 decides the range in which the additional image is disposed, in such a manner as to set the center of a circumscribed rectangle (intersection of diagonals) of the additional image at the point on the target image represented by the line-of-sight position information.

The output information generation section 25 synthesizes the additional image in the range decided by the position deciding section 24 on the target image generated by the screen generation section 21, and generates the output information including the target image and the additional image.

As exemplified in FIG. 3, the output information generation section 25 according to one example of the present embodiment synthesizes an additional image (Q) representing a figure of a predefined shape (for example, a cross, a rectangle, a circle, a star, or the like) in such a manner as to cause the additional image (Q) to overlap with the range decided by the position deciding section 24 on a target image (T) generated by the screen generation section 21, and generates the output information as a synthesized image (M). In this example, the size of the synthesized image as the output information is the same size (the numbers of vertical and horizontal pixels are each the same) as the target image generated by the screen generation section 21. Note that the kind of synthesized additional image may be selectable by the user, for example, or be selected without depending on human-made operation according to the contents of the target image generated by the screen generation section 21, as described later.

At this time, the output information generation section 25 may improve the visibility of the additional image by applying blur processing (Gaussian blur or the like is sufficient) to an image part including the range decided by the position deciding section 24 in the target image generated by the screen generation section 21.

Further, in the case in which part of the range decided by the position deciding section 24 is outside the synthesized image as the output information, that is, in the case in which the point indicated by the line-of-sight position information is at a peripheral part of the target image and part of the additional image protrudes from the target image if the additional image is synthesized without any change, the output information generation section 25 may execute control to keep the additional image from protruding to the outside of the synthesized image as the output information, by reducing the size of the additional image and synthesizing the additional image while adjusting the center thereof to the center of the range decided by the position deciding section 24, for example (peripheral part processing).

Moreover, in another example, this output information generation section 25 may change the contents of the additional image according to the contents of the target image. In one example of the present embodiment, this output information generation section 25 regards, as a target part, the range decided by the position deciding section 24 (or a range with such a size as to be capable of including a circle or a polygon that is centered at the position represented by the line-of-sight position information and is circumscribed about the additional image) in the target image, and changes the contents of the additional image according to the contents of part (corresponding to the partial image in the present invention) of the target image included in this target part.

Here, the contents of the additional image are, for example, the color, the size, the shape, and so forth of the additional image. As one example, the output information generation section 25 obtains the average pixel value (or mode pixel value) or the like of the pixels of the target image included in the target part, and refers to the hue of this average pixel value or the like. Then, in reference to the value of this referenced hue, the output information generation section 25 sets the color of the additional image to a color with the hue most separate from this referenced hue (for example, color in a complementary color relationship).

According to this example, it is possible to prevent the additional image from blending into the color of the target image and becoming difficult to visually recognize.

### [Line-of-sight Position Information among Frames]

Further, as already described, the target image generated by the screen generation section 21 does not need to be a still image and may be an image of a game, a moving image, or the like that successively changes. In this case, the line-of-sight information acquisition section 23 acquires the line-of-sight position information representing the position that is a position on each target image (frame image) successively generated by the screen generation section 21 and that represents the position of the line of sight of the user who executes operation while viewing a screen including the target image, from the line-of-sight detection device 40 at every predetermined timing.

When the line-of-sight information acquisition section 23 has acquired the line-of-sight position information, the output information generation section 25 synthesizes the additional image such that the additional image overlaps with the range decided by the position deciding section 24 in reference to the above-described acquired line-of-sight position information in the target image (frame image) output by the screen display control section 22 at the timing, and generates the output information as the synthesized image.

Note that, also in this example, the output information generation section 25 may execute blur processing for a predetermined range centered at the position at which the additional image for the target image is synthesized and may execute the peripheral part processing for the additional image. Moreover, the output information generation section 25 may execute processing of changing the contents of the additional image according to the contents of the target image.

### [Change in Line-of-sight Position Information]

Here, if the timing when the line-of-sight information acquisition section 23 acquires the line-of-sight position information from the line-of-sight detection device 40 corresponds with the timing of display of each frame of the target image, the line-of-sight position information is acquired every frame. Moreover, for each frame, the additional image is overlapped with the range centered at the line-of-sight position of the user in the corresponding frame image and is synthesized.

However, the line-of-sight position of the user successively changes. Hence, if the synthesis position of the additional image is settled to follow the minute change for each frame, the additional image appears to be fluctuating and would rather be difficult to visually recognize. Accordingly, in one example of the present embodiment, the position deciding section 24 may decide the synthesis range of the additional image in reference to the line-of-sight position information acquired by the line-of-sight information acquisition section 23 at every N (N is an integer equal to or larger than two) frames defined in advance.

In this example, the position deciding section 24 decides, in the first frame, the range in which the additional image is to be synthesized, in reference to the line-of-sight position information acquired by the line-of-sight information acquisition section 23, and then outputs this decided range as it is without change during the N frames including the first frame. As a result, during the N frames including the above-described frame, the output information generation section 25 synthesizes the additional image in the synthesis range settled for the first frame, to generate the synthesized image, and generates and outputs the output information including a series of synthesized images corresponding to the respective frames.

Further, the position deciding section 24 decides again the synthesis range of the additional image in reference to the line-of-sight position information acquired by the line-of-sight information acquisition section 23 at the timing when the target image of the N + 1-th frame from the first frame is displayed. Further, the position deciding section 24 outputs information regarding this decided synthesis range during the next N frames including this frame. In this example of the present embodiment, the synthesis range of the additional image changes at every N frames.

Description will be made by using a specific example. For example, in the case of N = 3, regarding the target images of the first, second, and third frames, the position deciding section 24 decides the synthesis range of the additional image in reference to information regarding the line-of-sight position of the user who has visually recognized the target image of the first frame. Then, for the target images of the first, second, and third frames, the output information generation section 25 synthesizes the additional image in the synthesis range decided in a manner corresponding to the first frame, to generate the synthesized images corresponding to the respective first, second, and third frames. Subsequently, regarding the target images of the fourth, fifth, and sixth frames, the position deciding section 24 decides the synthesis range of the additional image on the basis of information regarding the line-of-sight position of the user who has visually recognized the target image of the fourth frame. Then, for the target images of the fourth, fifth, and sixth frames, the output information generation section 25 synthesizes the additional image in the synthesis range decided in a manner corresponding to the fourth frame, to generate the synthesized images corresponding to the respective fourth, fifth, and sixth frames. In this manner, the processing is sequentially executed. As a result, the position of the additional image is changed only once per a plurality of frames, and does not frequently change. Hence, the additional image is prevented from appearing to be fluctuating, and the visibility thereof can be improved.

Moreover, although it has been explained here that the synthesis range of the additional image is decided in reference to the line-of-sight position information corresponding to the first frame among the N frames, the present embodiment is not limited to this example. For example, the position deciding section 24 may decide the synthesis range of the additional image in reference to the line-of-sight position information of the user acquired during display of the target images of N (N is an integer equal to or larger than two) frames displayed thus far (for example, the most recent consecutive N frames including the currently displayed frame).

As a specific example, at every N frames, the position deciding section 24 may settle the synthesis range of the additional image in reference to the average of the line-of-sight position information of the user during these N frames (during display of N frame images).

Furthermore, in another example, the output information generation section 25 may synthesize a plurality of additional images with the currently displayed target image to obtain the synthesized image, by using information regarding the synthesis range decided by the position deciding section 24 for each of N (N is an integer equal to or larger than two) frames displayed thus far (for example, the most recent consecutive N frames including the currently displayed frame).

In this example, the output information generation section 25 retains information regarding past N synthesis ranges decided by the position deciding section 24. Further, for the target image of the N + 1-th (for example, in the case of N = 3, the third) frame, by using information regarding the synthesis ranges corresponding to the most recent N (here, three) frames, the output information generation section 25 synthesizes the additional image in each of the synthesis range corresponding to the second frame, the synthesis range corresponding to the third frame, and the synthesis range corresponding to the fourth frame itself in the target image of the fourth frame. At this time, the output information generation section 25 may synthesize the additional image synthesized at a position corresponding to the line-of-sight position information of an older frame, with higher brightness (that is, with lower saturation) (FIG. 4: Q). Moreover, as the method of the synthesis, translucent synthesis may be employed, and the additional images may be synthesized in order from the past additional image (in the case in which the additional images overlap, the past additional image is covered).

In yet another example, by using the line-of-sight position information of the user acquired during display of the target images of N (N is an integer equal to or larger than two) frames displayed thus far (for example, the most recent consecutive N frames including the currently displayed frame), the position deciding section 24 may decide, as the synthesis range, a region in a circle or a polygon (referred to as a circumscribed figure) circumscribed about points represented by N pieces of the line-of-sight position information corresponding to these N frames.

In this example, the output information generation section 25 synthesizes, as the additional image, a figure with a predetermined shape including the above-described circumscribed figure with the target image, to generate the synthesized image.

Here, the above-described circumscribed figure may be a protruding hull around the points represented by the N pieces of the line-of-sight position information or be a figure with a predetermined shape, such as a circumscribed rectangle. According to this example, in the case in which the motion of the line of sight is relatively large, the additional image with a relatively large area according to this is synthesized. In the case in which the motion of the line of sight is relatively small, the additional image with a relatively small area according to this is synthesized. Furthermore, the shape of the additional image also changes depending on the direction of the movement of the line of sight. For example, in the case in which the line of sight greatly moves in a horizontal direction, the additional image that is relatively horizontally long is synthesized.

Moreover, in the examples described thus far, the position deciding section 24 updates the synthesis range at every predetermined number of frames defined in advance, for example. However, instead of this, for example, the position deciding section 24 may update and output the information regarding the range in which the additional image is synthesized, in the case in which the difference between the previous line-of-sight position information and the current line-of-sight position information (distance between the position indicated by the previous line-of-sight position information and the position indicated by the current line-of-sight position information) exceeds a predefined threshold.

In this example, the synthesis range of the additional image changes only when the movement of the line of sight of the user becomes relatively large.

### [Adjustment of Additional Image Based on Contents of Target Image]

Moreover, the decision of the synthesis range of the additional image or the mode of synthesis of the additional image by the position deciding section 24 and the output information generation section 25 may be controlled according to the contents of the target image generated by the screen generation section 21.

In this example, the screen generation section 21 outputs information regarding the display range of an object included in the target image, such as the display range of a game character, and provides the information for use by the position deciding section 24 and the output information generation section 25. Specifically, in the case in which the control section 11 is executing a game application, the screen generation section 21 outputs, to the output information generation section 25, information for specifying the display range of a game character rendered in the target image as a particular part (particular part specifying information).

In this case, the position deciding section 24 corrects the decided synthesis range when the synthesis range of the additional image decided by the already described processing overlaps with the particular part specified by the information output by the screen generation section 21. As an example of this correction, the synthesis range is reduced or a peripheral part of the display range is employed as the synthesis range. When having corrected the synthesis range, the position deciding section 24 may output information representing that the synthesis range has been corrected in addition to information for identifying the synthesis range.

Further, in the case in which the information representing that the synthesis range of the additional image has been corrected is included in addition to the information for identifying the synthesis range, the output information generation section 25 decides the mode of the additional image in conformity with information regarding the synthesis range resulting from the correction. For example, in the case in which the position deciding section 24 outputs the information representing that the synthesis range of the additional image has been corrected in addition to the information for identifying the synthesis range, the output information generation section 25 may employ, as the additional image, a figure obtained by filling the synthesis range resulting from the correction with a predetermined color. In this case, when the synthesis range is corrected to be reduced in reference to information regarding a specified particular range (P), a relatively small additional image (Q) is synthesized, and the covered range of a game character becomes small (FIG. 5(a)). Moreover, when a peripheral part of the display range of the game character is employed as the synthesis range, an additional image is synthesized to surround the game character (Q'). Thus, the game character itself is not covered (FIG. 5(b)).

In this example of the present embodiment, design of an object, such as a game character, that is included in the target image and becomes a target of display is not covered by a figure representing the position of the line of sight of the user. Thus, the visibility of the object is not lowered.

### [Line-of-sight Position Information Corresponding to Left and Right Eyes]

In the description made thus far, it has been explained that the number of images generated by the screen generation section 21 is one for each frame and the number of pieces of the line-of-sight position information acquired by the line-of-sight information acquisition section 23 is one. However, the present embodiment is not limited thereto.

For example, in the case of displaying frame images on the display device 30 such as an HMD for VR, the screen generation section 21 may generate, for each frame, a pair of frame images, a frame image for the left eye of the user and a frame image for the right eye.

Further, in this case, the line-of-sight position information acquired by the line-of-sight information acquisition section 23 may be the line-of-sight position information of either one of the left eye or the right eye. Alternatively, the line-of-sight information acquisition section 23 may acquire both the line-of-sight position information of the left eye that visually recognizes the frame image for the left eye and the line-of-sight position information of the right eye that visually recognizes the frame image for the right eye.

In the case in which the line-of-sight information acquisition section 23 acquires both the line-of-sight position information of the left eye and the line-of-sight position information of the right eye as in the latter case, the position deciding section 24 decides the synthesis range of the additional image based on the line-of-sight position information of the left eye and the synthesis range of the additional image based on the line-of-sight position information of the right eye for the frame image for the left eye and the frame image for the right eye, respectively.

Then, the output information generation section 25 synthesizes the additional image in the synthesis range of the additional image based on the line-of-sight position information of the left eye in the frame image for the left eye, to generate the output information that is the synthesized image for the left eye. Further, the output information generation section 25 synthesizes the additional image in the synthesis range of the additional image based on the line-of-sight position information of the right eye in the frame image for the right eye, to generate the output information that is the synthesized image for the right eye.

In this example, in the case in which the screen generation section 21 further generates a frame image for both eyes for displaying on a display (general frame image) besides the frame image for the left eye and the frame image for the right eye to be displayed on the display device 30 such as an HMD for VR, the output information generation section 25 may treat this frame image for both eyes as the target image and synthesize each additional image in the synthesis range corresponding to a respective one of the synthesis range of the additional image based on the line-of-sight position information of the left eye and the synthesis range of the additional image based on the line-of-sight position information of the right eye. In this case, the additional images may be synthesized in such a manner that the line-of-sight position of the left eye and the line-of-sight position of the right eye can be distinguished by differentiating each of the modes of the additional images, such as the colors (hue, saturation, brightness), the shapes, and the methods for rendering (distinction among a solid line, a dotted line, a dashed line, and the like) for the respective additional images.

### [Use of Output Information]

Moreover, the output information generated as in the above examples may be output as moving image data and be provided for use for, for example, delivery or the like.

### [Operation Example]

The information processing apparatus 10 according to an example of the present embodiment basically includes the above configuration and operates in the following manner. The information processing apparatus 10 of the present embodiment is, for example, a home-use game console that executes a game application, and records a screen displayed in the game application under execution, as moving image data, in accordance with an instruction by a user.

One of characteristics in the information processing apparatus 10 according to the example of the present embodiment is that the following processing is executed in this recording. Specifically, the information processing apparatus 10 successively generates images (target images) that become a screen of a game and sequentially outputs the images to the display device 30 such as an HMD to cause the display device 30 to display the images.

The user executes operation of the game while viewing the screen displayed on this display device 30. The information processing apparatus 10 accepts this operation by the user and provides the operation for processing of the game to update the screen of the game.

Meanwhile, the line-of-sight detection device 40 connected to the information processing apparatus 10 detects the position (point on the game screen) of the line of sight of the user who views the screen of the game. The information processing apparatus 10 executes processing exemplified in FIG. 6 concurrently with the processing of the game, and acquires the line-of-sight position information representing the position of the line of sight of this user from the line-of-sight detection device 40 (S11).

The information processing apparatus 10 disposes a rectangle circumscribed about a predefined additional image (for example, image of a cross figure additional image) in such a manner that the center of the rectangle is set to the point on the target image represented by the line-of-sight position information of the user acquired in step S11, and generates information regarding the synthesis range representing the range of this rectangle (identified by the coordinates of the upper left vertex thereof and the coordinates of the lower right vertex) (S12).

The information processing apparatus 10 synthesizes the above-described predetermined additional image in the synthesis range decided in step S12 on the target image (S13), and generates and records a synthesized image including the target image and the additional image (S14).

The information processing apparatus 10 repeats the processing from step S11 to step S14 until the user gives an instruction to stop the recording of the screen of the game or the game application is ended.

Then, upon ending the repetition of the processing from step S11 to step S14 through giving of an instruction to stop the recording of the screen of the game by the user, or the like, the information processing apparatus 10 allows the synthesized images recorded thus far to be reproduced in the order of the recording, to generate moving image data that is the output information (S15). A widely known encoding method can be employed as the generation method for such moving image data, and therefore detailed description thereof is omitted here. The information processing apparatus 10 outputs the generated moving image data and ends the processing.

The user uses the moving image data generated by this processing through, for example, uploading the moving image data to a sharing site of moving image data or the like.

Further, in another example, instead of recording the pieces of output information successively generated in step S14, the information processing apparatus 10 may sequentially send out the pieces of output information to a moving image delivery server (not illustrated) and deliver the output image as a moving image.

### [Example in Which Additional Image Is Synthesized in Reproduction]

Moreover, in the description made thus far, the information processing apparatus 10 that generates the target image generates the synthesized image obtained by synthesizing the additional image with the target image as the output information. However, the present embodiment is not limited thereto.

In a certain example of the present embodiment, instead of generating the synthesized image, the information processing apparatus 10 may transmit or record, as the output information together with the target image, the additional information representing the line-of-sight position, such as the line-of-sight position information itself or information regarding the synthesis range in which the additional image is synthesized, as the information necessary for generating the synthesized image. In this example, when a user has given an instruction to output the additional information or when settings to output the additional information have been made, the additional information representing the line-of-sight position, such as the line-of-sight position information itself or information regarding the synthesis range in which the additional image is synthesized, may be transmitted or recorded as the output information together with the target image. Here, in the case of employing information regarding the synthesis range as the additional information, it suffices for the information processing apparatus 10 to decide the synthesis range by the already described processing by the position deciding section 24.

One example of an information processing system including the information processing apparatus 10 according to this example is illustrated in FIG. 7. As exemplified in FIG. 7, the control section 11 of the information processing apparatus 10 on the side on which the output information is generated (hereinafter, referred to as the generation side) implements a configuration functionally including the screen generation section 21, the screen display control section 22, the line-of-sight information acquisition section 23, and a synchronous output section 31 by executing a program stored in the storage section 12. The control section 11 of the information processing apparatus 10 on the side on which the synthesized image is generated in reference to the output information and is displayed or the like (hereinafter, referred to as the reproduction side) implements a configuration functionally including a synchronous acceptance section 41, the position deciding section 24, a synthesized image generation section 25', and a reproduction processing section 42 by executing a program stored in the storage section 12.

Here, the information processing apparatus 10 on the generation side may be a server apparatus or the like that emulates the information processing apparatus 10. In this case, the information processing apparatus 10 on the generation side (it may be a virtual apparatus) receives and accepts operation accepted by another information processing apparatus 10 such as a personal computer connected through a network from a user thereof. Further, in this example, the information processing apparatus 10 on the generation side sends out the generated target image (frame image) and so forth to the above-described other information processing apparatus 10 and causes the image to be displayed (that is, the frame image is displayed on the display device 30 connected to this other information processing apparatus 10). In this example, this other information processing apparatus 10 may function as the information processing apparatus 10 on the reproduction side.

Note that, in the following description, those that execute operation similar to those of an already described configuration are given the same reference signs, and description thereof is simplified in order to avoid overlapping description.

In this example, the screen generation section 21 of the information processing apparatus 10 on the generation side successively generates frame images that become the target images. Moreover, the screen display control section 22 sequentially outputs the frame images successively generated by the screen generation section 21 to the display device 30 through the display control section 14, and causes the display device 30 to display the frame images. Also in this example, the user of the information processing apparatus 10 on the generation side executes operation while viewing the frame image displayed on this display device 30.

For each of the frame images that are the target images successively generated by the screen generation section 21, the line-of-sight information acquisition section 23 acquires, from the line-of-sight detection device 40, the line-of-sight position information representing the position that is a position on each frame image and is the position of the line of sight of the user who executes operation while viewing the screen including the frame image.

The synchronous output section 31 outputs the additional information based on the line-of-sight position information obtained for each frame image while causing the additional information to synchronize with the corresponding frame image. Here, the additional information is, for example, the information necessary for generating the synthesized image as already described. It suffices for the additional information to be the line-of-sight position information itself, information regarding the synthesis range in which the additional image is synthesized, or the like. In an example of the present embodiment, for this synchronization, the synchronous output section 31 may encode the additional information into a computer-readable image and embed the image in the corresponding frame image (use a technique for image embedding). Further, the synchronous output section 31 may implement the synchronization by encoding the additional information into a computer-readable image and recording the image on a relatively inconspicuous place such as a part at an end of the corresponding frame image.

Moreover, in another example, this synchronous output section 31 may send out or record the frame image in association with identification information unique to each frame image. In addition, in association with this identification information, the synchronous output section 31 may send out or record the additional information corresponding to the frame image identified by this identification information. Using the identification information for identifying the frame image in this manner makes it possible to send out or record the additional information such as the line-of-sight position information corresponding to each of the frame images included in moving image data, as information for synthesis processing, separately from the moving image data including the series of frame images. Such information for synthesis processing may be delivered separately from the moving image data or together with the moving image data through a file server on a network, or the like.

Further, in the case in which there is another kind of information that should be reproduced synchronously with the frame image (hereinafter, referred to as synchronously reproduced information), the synchronous output section 31 may include the additional information corresponding to the frame image in this other kind of information and transmit or record, as the output information, the synchronously reproduced information in which this additional information such as the line-of-sight position information is included, together with the series of frame images. As such synchronously reproduced information, there is sound information or the like that should be reproduced synchronously with the frame image.

In this example, the synchronous output section 31 encodes the additional information and includes it in, for example, the sound information that is the synchronously reproduced information by a method in which a baseband signal in an inaudible frequency range for humans is modulated and synthesized, or the like. Note that, in the case in which the identification information for identifying the frame image is further included, the additional information is synthesized with the left channel of stereo sound information, and the identification information of the corresponding frame image is synthesized with the right channel at the timing when the corresponding additional information is reproduced. Also in this case, it suffices to generate a first signal obtained by modulating a baseband signal in an inaudible frequency range for humans by the line-of-sight position information and a second signal obtained by modulating a baseband signal in an inaudible frequency range for humans by the identification information and synthesize the first and second signals with the sound information of the left and right channels, respectively.

However, this is one example. In the case of acquiring each of pieces of the line-of-sight position information regarding the left and right eyes, the synchronous output section 31 obtains a signal (referred to as an L signal) obtained by modulating a baseband signal in an inaudible frequency range for humans by the additional information based on the line-of-sight position information of the left eye, and synthesizes this L signal with the left channel of the stereo sound information. In addition, the synchronous output section 31 obtains a signal (referred to as R signal) obtained by modulating a baseband signal in an inaudible frequency range for humans by the additional information based on the line-of-sight position information of the right eye, and synthesizes this R signal with the right channel of the stereo sound information.

In the case of further including the identification information for identifying the frame image here, the synchronous output section 31 may generate a third signal by modulating, by the identification information, a baseband signal that has a different frequency from the baseband signals used in generating the above-described L signal and R signal and that falls within an inaudible frequency range for humans, and further synthesize the third signal with at least one of the left channel or the right channel of the stereo sound information with which the L signal or the R signal is synthesized.

In yet another example, the synchronous output section 31 may record a sound signal in one of the left channel or the right channel of the stereo sound information (that is, make the sound signal into a monaural sound signal), and record the above-described L signal or R signal in an empty channel in which the sound signal is not recorded and which is either the left channel or the right channel of the stereo sound information. In the case in which the frequencies of the baseband signals used for generation of the L signal and the R signal are different from each other, the synchronous output section 31 may synthesize the two signals and record the synthesized signal. The synchronous output section 31 may further superimpose the third signal on the L signal or the R signal and record the resulting signal in this empty channel.

In the case in which information is recorded in the channels of the sound information as described above, in the information processing apparatus 10 on the reproduction side to be described later, the information is acquired through demodulation from the sound information by use of the baseband signal used in modulation of the information, or the like.

Here, the synchronously reproduced information is not limited to the sound information. For example, in the case of recording information representing operation executed by a user, or the like, with the information synchronizing with the frame image, the additional information based on the line-of-sight position information or identification information may be recorded in such a manner as to overlap with the information representing operation, or the like (in such a manner as to be allowed to be separated from the information representing operation by a computer).

Note that, in the case in which the output destination specified by a user is not a predefined output destination such as a server for delivery, when, for example, a memory card or the like connected by universal serial bus (USB) is specified as the output destination, the synchronous output section 31 may output frame images, the additional information, the synchronously reproduced information, and so forth as they are without including the additional information and the synchronously reproduced information in the output.

Next, the synchronous acceptance section 41 of the control section 11 of the information processing apparatus 10 on the reproduction side corresponding to the information processing apparatus 10 on the generation side in this example accepts the output information generated by the information processing apparatus 10 on the generation side through receiving it or acquiring it from a server, a storage device, or the like in which the output information is recorded. This synchronous acceptance section 41 extracts a series of frame images from the accepted output information. Furthermore, this synchronous acceptance section 41 extracts the additional information such as the line-of-sight position information from the accepted output information.

In the case in which the additional information has been encoded into a computer-readable image and been recorded in the corresponding frame image, the synchronous acceptance section 41 extracts the additional information based on the line-of-sight position information of each frame image by reading the encoded image and decoding the additional information.

Moreover, in the case in which the additional information is delivered or recorded in association with the identification information of the frame image, the synchronous acceptance section 41 extracts the additional information together with this identification information. Further, in the case in which the additional information is included in the synchronously reproduced information such as sound information, the synchronous acceptance section 41 decodes and extracts the additional information from this synchronously reproduced information.

In reference to the additional information of the user extracted by the synchronous acceptance section 41 for each frame image, the position deciding section 24 decides the overlap position of the additional image that has been extracted by the synchronous acceptance section 41 and that is disposed to overlap with the corresponding frame image. As one example, when the additional information is the line-of-sight position information itself, this position deciding section 24 sets the center of a circumscribed rectangle (intersection of diagonals) of the additional image as the point on the corresponding frame image indicated by the line-of-sight position information that is the additional information, and decides the range in which the additional image is to be disposed.

When the additional information is the line-of-sight position information itself, this position deciding section 24 executes operation similar to that of the position deciding section 24 already described, and executes processing according to the example of the position deciding section 24 described thus far, such as processing of deciding the synthesis range of the additional image for the corresponding frame image in reference to the extracted additional information at every N (N is an integer equal to or larger than two) frames defined in advance.

Moreover, when the additional information is the synthesis range of the additional image, the position deciding section 24 may set the center of this synthesis range to the line-of-sight position information, and execute operation similar to that of the position deciding section 24 already described. Alternatively, the position deciding section 24 may regard the synthesis range of the additional image represented by this additional information as the synthesis range in which the additional image is synthesized, and output the synthesis range to the synthesized image generation section 25'.

The synthesized image generation section 25' executes operation similar to that of the output information generation section 25 described thus far, and generates the synthesized image by synthesizing the additional image in the synthesis range decided by the position deciding section 24 in a manner corresponding to the frame image on the frame image as the target image extracted by the synchronous acceptance section 41.

The reproduction processing section 42 sequentially reproduces the synthesized images generated by the synthesized image generation section 25' and outputs the synthesized images to the display device 30. The user of this information processing apparatus 10 on the reproduction side watches the series of synthesized images displayed on this display device 30.

In the case in which the synchronous acceptance section 41 has accepted the synchronously reproduced information such as sound information that should be reproduced together with the frame image, this reproduction processing section 42 synchronously reproduces the synchronously reproduced information together with this frame image.

Note that the following operation may be executed. The control section 11 of the information processing apparatus 10 on the reproduction side decides whether or not to execute synthesis processing of the additional image by use of the additional information extracted from the accepted output information, according to an instruction input from the user or settings. In the case in which execution of the synthesis processing is decided, the synthesized image generation section 25' generates the synthesized image arising from synthesis of the additional image. In the case in which the synthesis processing is not to be executed, the frame images are sequentially reproduced without synthesis of the additional image being executed. This can switch whether or not to synthesize the additional image according to the instruction by the user or the settings.

Further, whether or not to execute the synthesis processing of the additional image by use of the additional information may be set according to not only the instruction by the user but also, for example, the apparatus type of the information processing apparatus 10 on the reproduction side. For example, the synthesis processing may be executed in the case in which the information processing apparatus 10 is a personal computer or a home-use game console, and non-execution of the synthesis processing may be decided in the case in which the information processing apparatus 10 is a smartphone or the like.

### [Other Operation Examples in Information Processing Apparatus on Reproduction Side]

Moreover, the synthesized image generation section 25' in the information processing apparatus 10 on the reproduction side may differentiate the kind and mode of the additional image to be synthesized with the frame image depending on the kind of the information processing apparatus 10 on the reproduction side (distinction among a personal computer, a home-use game console, a smartphone, a tablet terminal, and the like), the kind and screen size of the display device 30 connected to it, the use scene (distinction among outdoor use, indoor use, and the like), and the like.

### [Other Use Examples of Line-of-sight Position Information]

Further, in the information processing apparatus 10 that acquires the line-of-sight position information, this line-of-sight position information may be used for other use purposes besides being synthesized with the target image or being output for synthesis.

For example, when a user has executed predetermined operation on the target image displayed on the display device 30, information required by the user may be displayed in the neighborhood of the line-of-sight position of the user acquired at the timing. Here, the neighborhood of the line-of-sight position is deemed as not the position per se indicated by the line-of-sight position information but a position that is a position separate from the position indicated by the line-of-sight position information by a predetermined distance and can be visually recognized by the user without greatly moving the line of sight. This makes it possible to display the information without covering a region that the user or the viewer attempts to view.

Moreover, for example, when a shooting game is being executed, the information required by the user includes pieces of information such as the number of remaining bullets, geographical information (map), position information regarding a character that is an enemy, and information regarding button operation of a game controller (which button has been pressed), and information regarding an enemy character. Here, the information regarding an enemy character may be displayed in a display region closest to a region set as the neighborhood of the line-of-sight position in a region that does not overlap with the neighborhood of the line-of-sight position or the display range of the enemy character.

Furthermore, the above-described display may be executed with avoidance of the display range of a character that is being operated by the user so as not to overlap with this display range. This allows the display of the information to be kept from overlapping with the operation target or the like and interfering with operation by the user.

The present disclosure also includes the following modes.

### [Item 1]

An information processing apparatus including:
one or more processors, in which
the one or more processors
generate a screen including an image that becomes a target of operation by a user,
acquire line-of-sight position information representing a position that is a position on the generated image and is a position of a line of sight of the user who executes operation while viewing the screen including the image, and
generate output information including additional information representing the acquired line-of-sight position information of the user and the image included in the screen, and
the output information is provided for predetermined processing.

### [Item 2]

The information processing apparatus according to item 1, in which
the image that is generated and becomes the target of operation by the user is a moving image including a plurality of frame images, and
the one or more processors successively
acquire the line-of-sight position information representing the position of the line of sight of the user who executes operation while viewing the moving image during display of the moving image, and
generate the output information by associating the additional information representing the acquired line-of-sight position information of the user with a corresponding frame image of the moving image.

### [Item 3]

The information processing apparatus according to item 2, in which
the one or more processors generate the output information by associating the additional information representing the line-of-sight position information of the user acquired during display of frame images of consecutive N (N is an integer equal to or larger than two) frames including at least one of frame images previous and subsequent to the corresponding frame image in the moving image, with the corresponding frame image of the moving image.

### [Item 4]

The information processing apparatus according to item 1, in which
the additional information is an additional image representing the position of the line of sight of the user represented by the line-of-sight position information, and
the one or more processors generate the output information including the additional image disposed to overlap with the image and the image included in the screen, in reference to the acquired line-of-sight position information of the user.

### [Item 5]

The information processing apparatus according to item 2, in which
the additional information is an additional image representing the position of the line of sight of the user represented by the line-of-sight position information, and
the one or more processors generate the output information by disposing the additional image in such a manner as to overlap with the corresponding frame image of the moving image, in reference to the acquired line-of-sight position information of the user.

### [Item 6]

The information processing apparatus according to item 5, in which
the one or more processors generate the output information through deciding contents of the additional image according to a partial image at a position at which the additional image is overlapped in the frame image when the additional image is disposed in such a manner as to overlap the corresponding frame image of the moving image.

### [Item 7]

The information processing apparatus according to item 6, in which
the one or more processors generate the output information through deciding a mode of the additional image in reference to information relating to a color of a partial image at a position at which the additional image is overlapped in the frame image when the additional image is disposed in such a manner as to overlap the corresponding frame image of the moving image.

### [Item 8]

The information processing apparatus according to item 4, in which
the one or more processors acquire information representing a particular part included in the image that becomes the target of operation from the screen generation means, and decide a position at which the additional image is disposed by using the acquired information.

### [Item 9]

The information processing apparatus according to item 4, in which
the one or more processors acquire information representing a particular part included in the image that becomes the target of operation from the screen generation means, and decide a mode of the additional image by using the acquired information.

### [Item 10]

A control method for an information processing apparatus including one or more processors, in which
the one or more processors
generate a screen including an image that becomes a target of operation by a user,
acquire line-of-sight position information representing a position that is a position on the generated image and is a position of a line of sight of the user who executes operation while viewing the screen including the image,
output information generation means generates output information including additional information representing the acquired line-of-sight position information of the user and the image included in the screen, and
the output information is provided for predetermined processing.

### [Claim 11]

A computer-readable non-transitory recording medium storing a program that causes a computer to perform a process of: generating a screen including an image that becomes a target of operation by a user;
acquiring line-of-sight position information representing a position that is a position on the generated image and is a position of a line of sight of the user who executes operation while viewing the screen including the image;
generating output information including additional information representing the acquired line-of-sight position information of the user and the image included in the screen, and
providing the output information for predetermined processing.

### [Reference Signs List]

10: Information processing apparatus
11: Control section
12: Storage section
13: Operation acquisition section
14: Display control section
15: Communication section
20: Controller device
21: Screen generation section
22: Screen display control section
23: Line-of-sight information acquisition section
24: Position deciding section
25: Output information generation section
25': Synthesized image generation section
30: Display device
31: Synchronous output section
40: Line-of-sight detection device
41: Synchronous acceptance section
42: Reproduction processing section

## Claims

1. An information processing apparatus comprising:
screen generation means that generates a screen including an image that becomes a target of operation by a user;
acquisition means that acquires line-of-sight position information representing a position that is a position on the generated image and is a position of a line of sight of the user who executes operation while viewing the screen including the image; and
output information generation means that generates output information including additional information representing the acquired line-of-sight position information of the user and the image included in the screen, wherein
the output information is provided for predetermined processing.

2. The information processing apparatus according to claim 1,
wherein
the image that is generated and becomes the target of operation by the user is a moving image including a plurality of frame images,
the acquisition means successively acquires the line-of-sight position information representing the position of the line of sight of the user who executes operation while viewing the moving image during display of the moving image, and
the output information generation means generates the output information by associating the additional information representing the acquired line-of-sight position information of the user with a corresponding frame image of the moving image.

3. The information processing apparatus according to claim 2,
wherein
the output information generation means generates the output information by associating the additional information representing the line-of-sight position information of the user acquired during display of frame images of consecutive N (N is an integer equal to or larger than two) frames including at least one of frame images previous and subsequent to the corresponding frame image in the moving image, with the corresponding frame image of the moving image.

4. The information processing apparatus according to any one of claims 1 to 3, wherein
the additional information is an additional image representing the position of the line of sight of the user represented by the line-of-sight position information, and
the output information generation means generates the output information including the additional image disposed to overlap with the image and the image included in the screen, in reference to the acquired line-of-sight position information of the user.

5. The information processing apparatus according to claim 2 or 3, wherein
the additional information is an additional image representing the position of the line of sight of the user represented by the line-of-sight position information, and
the output information generation means generates the output information by disposing the additional image in such a manner as to overlap with the corresponding frame image of the moving image, in reference to the acquired line-of-sight position information of the user.

6. The information processing apparatus according to claim 5,
wherein
the output information generation means generates the output information through deciding contents of the additional image according to a partial image at a position at which the additional image is overlapped in the frame image when the additional image is disposed in such a manner as to overlap the corresponding frame image of the moving image.

7. The information processing apparatus according to claim 6,
wherein
the output information generation means generates the output information through deciding a mode of the additional image in reference to information relating to a color of a partial image at a position at which the additional image is overlapped in the frame image when the additional image is disposed in such a manner as to overlap the corresponding frame image of the moving image.

8. The information processing apparatus according to any one of claims 4 to 7, wherein
the output information generation means acquires information representing a particular part included in the image that becomes the target of operation from the screen generation means, and decides a position at which the additional image is disposed by using the acquired information.

9. The information processing apparatus according to any one of claims 4 to 8, wherein
the output information generation means acquires information representing a particular part included in the image that becomes the target of operation from the screen generation means, and decides a mode of the additional image by using the acquired information.

10. A control method for an information processing apparatus,
wherein
screen generation means generates a screen including an image that becomes a target of operation by a user,
acquisition means acquires line-of-sight position information representing a position that is a position on the generated image and is a position of a line of sight of the user who executes operation while viewing the screen including the image,
output information generation means generates output information including additional information representing the acquired line-of-sight position information of the user and the image included in the screen, and
the output information is provided for predetermined processing.

11. A program that causes a computer to function as:
screen generation means that generates a screen including an image that becomes a target of operation by a user;
acquisition means that acquires line-of-sight position information representing a position that is a position on the generated image and is a position of a line of sight of the user who executes operation while viewing the screen including the image; and
output information generation means that generates output information including additional information representing the acquired line-of-sight position information of the user and the image included in the screen, wherein
the program provides the output information for predetermined processing.
